# EUROPÄISCHE PATENTANMELDUNG

(11) **EP 4 331 901 A1**
(43) Veröffentlichungstag der Anmeldung: **06.03.2024**
(21) Anmeldenummer: 23200810.2
(22) Anmeldetag: 26.02.2018
(51) Int. Cl.: B60L 53/14, H02J 7/00

(54) **LADESTATION UND BETRIEBSVERFAHREN HIERFÜR**

(30) Priorität: 09.03.2017 DE 102017105014
(62) Teilanmeldung aus: 18158508.4
(71) Anmelder: Compleo Charging Solutions GmbH & Co. KG, 44379 Dortmund (DE)
(72) Erfinder: Kachouh, Checrallah, 44227 Dortmund (DE)
(74) Vertreter: Wickord, Wiro

(57) **Zusammenfassung**

Die Erfindung betrifft ein Betriebsverfahren für eine zur Bereitstellung elektrischer Energie für ein elektrisches Fahrzeug (23) ausgebildete Ladestation (1), umfassend die folgenden Schritte:
- es wird ein Startsignal für einen Ladevorgang empfangen und an eine Zentralsteuereinheit (2) der Ladestation (1) geleitet;
- von der Zentralsteuereinheit (2) wird ein Schaltelement (4) betätigt zum Aktivieren des Ladevorgangs;
- von der Zentralsteuereinheit (2) wird ein erstes Triggersignal erzeugt und rückwirkungsfrei an einen Sicherheitsprozessor (11) gesendet;
- über eine Ladeleitung (5) wird nach dem Aktivieren an einem Steckelement (6) die elektrische Energie bereitgestellt;
- mittels eines geeichten Energiezählers (3) wird eine bereitgestellte Energiemenge erfasst;
- ein aktueller Zählerstand des Energiezählers (3) wird über eine gesicherte Datenleitung (14) von dem Energiezähler (3) an den Sicherheitsprozessor (11) übertragen;
- beim Empfang des ersten Triggersignals der aktuelle Zählerstand des Energiezählers (3) in einen Sicherheitsdatenspeicher (12) geschrieben;
- zur Beendigung des Ladevorgangs wird ein Stoppsignal empfangen und an die Zentralsteuereinheit (2) der Ladestation (1) geleitet;
- von der Zentralsteuereinheit (2) wird das Schaltelement (4) betätigt zum Deaktivieren des Ladevorgangs;
- von der Zentralsteuereinheit (2) wird ein zweites Triggersignal erzeugt und rückwirkungsfrei an den Sicherheitsprozessor (11) des Sicherheitsmoduls (10) übertragen;
- von dem Sicherheitsprozessor (11) wird beim Empfang des zweiten Triggersignals der aktuelle Zählerstand des Energiezählers (3) in den Sicherheitsdatenspeicher (12) geschrieben.

## Beschreibung

Die Erfindung betrifft ein Betriebsverfahren für eine der Bereitstellung elektrischer Energie dienenden Ladestation. Eine derartige Ladestation zum Bereitstellen elektrischer Energie für ein elektrisch betreibbares Fahrzeug umfasst ein Vorrichtungsgehäuse, ein Steckelement, welches mittelbar oder unmittelbar an ein dem Fahrzeug zugeordnetes Gegensteckelement ansetzbar ist, eine zu dem Steckelement geführte Ladeleitung, über die die elektrische Energie zugeführt ist, ein der Ladestation zugeordnetes Schaltelement zum Aktivieren und/oder Deaktivieren des Ladevorgangs, einen Energiezähler für die über die Ladeleitung bereitgestellte elektrische Energie, eine mit dem Schaltelement in einer Wirkverbindung stehenden Zentralsteuereinheit mit einem Zentralprozessor und/oder mit einem Zentralspeicher und eine Betätigungseinrichtung, wobei die Betätigungseinrichtung ausgebildet ist zum Entgegennehmen eines Betätigungssignals und wobei die Zentralsteuereinheit ausgebildet ist zum Schalten des Schaltelements derart, dass der Ladevorgang in Abhängigkeit des Betätigungssignals aktiviert und/oder deaktiviert wird.

Ladestationen für Elektrofahrzeuge werden wahlweise im privaten Bereich oder im öffentlichen Raum aufgestellt und betrieben. Im privaten Bereich ist die Abrechnung eines Ladevorgangs regelmäßig einfach. Typischerweise erfolgt die Abrechnung unmittelbar über den privaten Energieversorger, der eine vertragliche Verbindung mit dem Nutzer hat. Im öffentlichen Bereich stellt die Abrechnung des Ladevorgangs den Betreiber der Ladestation vor das Problem, den Vorgaben des Mess- und Eichgesetzes gerecht zu werden. Problematisch ist dies insbesondere, da die Ladestationen im öffentlichen Bereich durch eine Vielzahl unterschiedlicher Nutzer verwendet werden und diese Nutzer mithin keine feste vertragliche Bindung zum Betreiber der Ladestation haben. Eine 1:1-Beziehung zwischen dem Nutzer und einem Energiezähler der Ladestation liegt im öffentlichen Raum - anders als im privaten Bereich - daher typischerweise nicht vor. Häufig ist es vielmehr so, dass die verschiedenen Nutzer eine vertragliche Verbindung zu einem Dienstleister, dem sogenannten Mobility Service Provider haben und dieser Dienstleister die Ladevorgänge seiner verschiedenen Kunden gegenüber dem Betreiber der Ladestation abrechnet.

Überdies erfolgt die Abrechnung des Ladevorgangs mithin zeitversetzt, beispielsweise am Ende einer Abrechnungsperiode insbesondere monatlich oder quartalsweise. Eine Kontrolle des Zählerstands ist folglich zum Zeitpunkt der Abrechnung für den Nutzer nicht mehr möglich. Es ist insofern beispielsweise aus der US 2009/0021213 A1, der DE 10 2009 014 295 A1, der CN 204 761 090 U und der DE 20 2010 014 316 U1 bekannt, die Ladestation mit einem Belegdrucker zu versehen und dem Nutzer nach der Beendigung des Ladevorgangs eine Quittung mit den wesentlichen Informationen zum Ladevorgang als Papierbeleg zur Verfügung zu stellen. In der Praxis haben sich diese Ladestationen gleichwohl nicht durchgesetzt. Dies mag insbesondere daran liegen, dass der logistische Aufwand deutlich zunimmt, welcher mit dem Bereitstellen von Papier und der Wartung des Druckers verbunden ist.

Aufgabe der vorliegenden Erfindung ist es, ein Betriebsverfahren für eine Ladestation anzugeben, welches den Vorgaben des Mess- und Eichgesetzes genügen. Der Ladevorgang soll insofern eichrechtskonform gegenüber einem Nutzer abrechenbar sein und die Unterhaltung der Ladestation sich vereinfachen.

Der Energiezähler einer zur Durchführung des erfindungsgemäßen Verfahrens nutzbaren Ladestation ist als ein geeichter Energiezähler ausgebildet. In dem Vorrichtungsgehäuse der Ladestation sind ein Sicherheitsmodul mit einem separaten Sicherheitsgehäuse, mit einem in dem Sicherheitsgehäuse angeordneten Sicherheitsdatenspeicher, mit einem in dem Sicherheitsgehäuse angeordneten Sicherheitsprozessor, mit einer von dem Sicherheitsgehäuse umgriffenen Datenanzeigeeinrichtung, mit einer dem Sicherheitsgehäuse zugeordneten ersten Datenleitungsschnittstelle und mit einer dem Sicherheitsgehäuse zugeordneten zweiten Datenleitungsschnittstelle sowie eine zur Entgegennahme eines an den Sicherheitsprozessor weiterzuleitenden Prüfsignals ausgebildeten Eingabeeinrichtung vorgesehen, wobei die erste Datenleitungsschnittstelle des Sicherheitsmoduls über eine gesicherte Datenleitung mit dem Energiezähler verbunden ist und dem Empfang eines aktuellen Zählerstands des Energiezählers dient, wobei die zweite Datenleitungsschnittstelle des Sicherheitsmoduls über eine Steuerungsleitung mit der Zentralsteuereinheit verbunden ist und wobei die Verbindung des Sicherheitsmoduls mit der Zentralsteuereinheit rückwirkungsfrei ausgebildet ist.

Der besondere Vorteil besteht darin, dass als Teil der Ladestation ein separat ausgebildetes Sicherheitsmodul mit einem eigenen Gehäuse (Sicherheitsgehäuse) vorgesehen ist. Das Sicherheitsmodul dient der manipulationsgeschützten und dauerhaften Speicherung aller zur Abrechnung des Ladevorgangs relevanten Informationen. Der Nutzer beziehungsweise Rechnungsempfänger kann insofern sicher sein, dass die Abrechnung des Ladevorgangs korrekt erfolgt und/oder zu einem späteren Zeitpunkt überprüft werden kann.

Das Sicherheitsmodul weist einen Sicherheitsprozessor sowie einen Sicherheitsdatenspeicher auf. Der Sicherheitsprozessor und der Sicherheitsdatenspeicher sind zusätzlich und räumlich getrennt von der Zentralsteuereinheit und einem Zentralprozessor und/oder einem Zentralspeicher der Ladestation als eigenständige Funktionskomponenten ausgebildet. Der Sicherheitsprozessor dient insofern nicht dazu, den eigentlichen Ladevorgang durchzuführen. Ebenso wenig dient er dazu, eine Kommunikation der Ladestation mit externen Komponenten, beispielsweise einer ortsfern von der Ladestation vorgesehenen Zentralstation eines Betreibers der Ladestation, dem mit der Ladestation über ein Ladekabel verbundenen Fahrzeug oder dem Nutzer während des Ladevorgangs zu realisieren. All diese Funktionen werden von der Zentralsteuereinheit mit dem Zentralprozessor und dem optional vorgesehenen Zentralspeicher übernommen.

Das Sicherheitsmodul hat zur Realisierung der ausreichenden mechanischen und/oder informationstechnischen Sicherheit neben dem Sicherheitsgehäuse eine erste Datenleitungsschnittstelle und eine zweite Datenleitungsschnittstelle.

Die zweite Datenleitungsschnittstelle verbindet das Sicherheitsmodul mit der Zentralsteuereinheit der Ladestation. Sie ist rückwirkungsfrei ausgebildet und verhindert, dass in unzulässiger Weise ein Zugriff auf das Sicherheitsmodul erfolgt und insbesondere in dem Sicherheitsdatenspeicher des Sicherheitsmoduls gespeicherte Daten gelöscht oder verändert werden.

Die Eichrechtskonformität der Ladestation wird durch das Vorsehen eines nicht manipulierbaren Sicherheitsdatenspeichers für die abrechnungsrelevanten Daten des Ladevorgangs hergestellt. Der Sicherheitsdatenspeicher ist als Teil eines vor einem manipulativen Zugriff mechanisch wie datentechnisch geschützten Sicherheitsmoduls, welches mit einem eigenen Sicherheitsgehäuse ausgestattet ist und von dem Vorrichtungsgehäuse der Ladestation umgeben wird.

Die Ladestation kann als AC-Ladestation oder als DC-Ladestation ausgebildet sein. Während bei der AC-Ladestation beispielsweise ein Schütz als Schaltelement vorgesehen sein kann, kann bei der DC-Ladestation die Leistungselektronik zum Aktivieren beziehungsweise Deaktivieren des Ladevorgangs dienen. Insofern kann das Schaltelement bei der DC-Ladestation beispielsweise als elektronisches Schaltelement und insbesondere als ein Bipolartransistor mit isolierter Gate-Elektrode (IGBT) realisiert sein.

Der Energiezähler der Ladestation ist geeicht, wenn er nach lokalen, nationalen beziehungsweise länderübergreifenden Vorgaben zugelassen ist, um zu Abrechnungszwecken eingesetzt zu werden. Beispielsweise werden Energiezähler mit einer Konformitätsbescheinigung, beispielsweise MID-konforme Energiezähler als geeichte Energiezähler aufgefasst.

Die Verbindung des Sicherheitsmoduls mit der Zentralsteuereinheit gilt als rückwirkungsfrei gemäß der PTB-A 50.7 der Physikalisch Technischen Bundesanstalt (Stand: 2002) oder gleichwertiger sonstiger lokaler, nationaler beziehungsweise länderübergreifender Standards. Hiervon umfasst ist unter anderem die elektrische Rückwirkungsfreiheit derart, dass durch Kurzschlüsse zwischen beliebigen Anschlüssen der zweiten Datenleitungsschnittstelle eichtechnisch relevante Funktionen und Daten, welche in dem Sicherheitsmodul realisiert beziehungsweise gespeichert sind, nicht beeinflusst werden. Darüber hinaus ist die Datenleitungsschnittstelle logisch rückwirkungsfrei auszubilden derart, dass die speziellen Softwareanforderungen nach dem Anhang PTB-A 50.7-1 zur vorstehend genannten Norm realisiert sind und insbesondere nur vorab definierte Zugriffe durchgeführt und/oder Daten übertragen werden können. Es ist hierbei insbesondere berücksichtigt, dass die Verarbeitungsroutinen des Sicherheitsmoduls über die zweite Datenleitungsschnittstelle nicht in unzulässiger Weise beeinflusst werden können.

Ferner umfasst die Ladestation eine Betätigungseinrichtung, welche ausgebildet ist zur Entgegennahme eines Betätigungssignals, mit dem der Ladevorgang gestartet (Startsignal) oder gestoppt (Stoppsignal) werden kann. Überdies kann ein Unterbrechungssignal für den Ladevorgang als weiteres Betätigungssignal vorgesehen sein. Die Betätigungseinrichtung umfasst beispielsweise eine Nutzerinteraktionsschnittstelle, welche insbesondere nach Art eines RFID-Lesers ausgebildet sein kann. Darüber hinaus umfasst die Betätigungseinrichtung insbesondere alle separat oder als Teil anderer Funktionskomponenten der Ladestation ausgebildete Empfangseinheiten. Sie dient insofern beispielsweise dem kabellosen oder leitungsgebundenen Empfang des Betätigungssignals von dem mit der Ladestation verbundenen Fahrzeug oder einer ortsfern von der Ladestation vorgesehenen Zentralstation. Insbesondere können Teile der Zentralsteuereinheit der Betätigungseinrichtung zugeordnet sein.

Das Sicherheitsmodul und der Energiezähler können beispielsweise als getrennte Bauteile realisiert sein. Das Sicherheitsmodul und der Energiezähler können dann räumlich getrennt voneinander in der Ladestation vorgesehen sein. Beispielsweise können der Energiezähler und das Sicherheitsmodul unmittelbar aneinander angebaut sein derart, dass das Sicherheitsgehäuse des Sicherheitsmoduls an ein Gehäuse des Energiezählers angebaut ist. Beispielsweise können die aneinander angebauten Gehäuse miteinander verbunden sein. Insbesondere kann vorgesehen sein, dass eine Trennung der Gehäuse nicht möglich ist oder zu einem späteren Zeitpunkt nachgewiesen werden kann. Es kann insofern beispielsweise das Sicherheitsgehäuse des Sicherheitsmoduls mit dem Gehäuse des Energiezählers verplombt sein beziehungsweise eine Versiegelung vorgesehen sein. Beispielsweise können der Energiezähler und das Sicherheitsmodul räumlich integriert sein. Das Sicherheitsgehäuse bildet dann ein gemeinsames Gehäuse für den Energiezähler und das Sicherheitsmodul. Auf ein separates Gehäuse für den Energiezähler kann dann optional verzichtet werden.

Die erste Datenleitungsschnittstelle dient dazu, dass Sicherheitsmodul über die gesicherte Datenleitung mit dem Energiezähler der Ladestation zu verbinden. Die gesicherte Datenleitung kann beispielsweise als konduktive Datenleitung, das heißt als elektrisch leitendes Datenkabel ausgebildet sein. Insbesondere kommt ein Kupferkabel oder ein Aluminiumkabel als konduktive Datenleitung infrage. Beispielsweise kann ein nicht-konduktives Datenkabel, beispielsweise ein Glasfaserkabel vorgesehen sein zur Signalübertragung. Ebenfalls kann vorgesehen sein, dass die Signalübertragung mittels einer nicht kabelgebundenen Datenleitung, beispielsweise via Funk oder optisch erfolgt.

Die gesicherte Datenleitung kann beispielsweise im Sinne einer Kapselung und/oder Einhäusung mechanisch gegen einen unautorisierten und insbesondere in manipulativer Absicht durchgeführten Zugriff gesichert sein. Die gesicherte Datenleitung kann beispielsweise verplombt ausgebildet sein. Sofern der Energiezähler in das Sicherheitsmodul integriert ist und/oder die Gehäuse des Energiezählers und des Sicherheitsmoduls aneinander angebaut und manipulationssicher verbunden sind, kann die mechanische Sicherung der Datenleitung durch die verplombten Gehäuse selbst bereitgestellt sein. Beispielsweise kann die Sicherheit über elektrische beziehungsweise elektronische Mittel hergestellt werden. Insofern kann die Datenleitung der Übertragung signierter beziehungsweise verschlüsselter Zählerstände von dem Energiezähler an das Sicherheitsmodul dienen. Die Sicherung der Datenleitung kann nach der Erfindung rein mechanisch (beispielsweise Kapselung, Einhäusung, Verplombung) oder rein elektrisch (beispielsweise Signatur, Verschlüsselung) oder mechanisch und elektrisch zugleich ausgebildet sein.

Die erste Datenleitungsschnittstelle kann als bidirektionale Schnittstelle ausgebildet sein zur Übertragung von Daten von dem Sicherheitsmodul zu dem Energiezähler einerseits und von dem Energiezähler zu dem Sicherheitsmodul andererseits. Beispielsweise können bei der bidirektionalen Ausbildung der Datenleitungsschnittstelle Abfragesignale von dem Sicherheitsmodul an den Energiezähler übertragen werden. Der Energiezähler sendet dann nach Empfang der Abfragesignale den aktuellen Zählerstand über die erste Datenleitungsschnittstelle an das Sicherheitsmodul. Alternativ kann die erste Datenleitungsschnittstelle ausgebildet zur monodirektionalen Übertragung von Daten (Zählerständen) des Energiezählers an das Sicherheitsmodul.

Das Sicherheitsmodul kann ein Sicherheitsgehäuse umfassen, welches vor einem nicht autorisierten Zugriff geschützt ist. Insofern kann das Sicherheitsgehäuse des Sicherheitsmoduls beispielsweise verplombt oder versiegelt sein, um einen Manipulationsversuch beziehungsweise einen nicht autorisierten Zugriff nachweisen zu können.

Die Ladestation kann eine dem Sicherheitsmodul zugeordnete Eingabeeinrichtung vorsehen. Über die Eingabeeinrichtung kann ein Nutzer der Ladestation in einer vorab exakt definierten Weise mit dem Sicherheitsmodul beziehungsweise dem Sicherheitsprozessor des Sicherheitsmoduls und dem Sicherheitsdatenspeicher des Sicherheitsmoduls derart interagieren, dass abrechnungsrelevante und in dem Sicherheitsdatenspeicher eichrechtskonform und dauerhaft gespeicherte Informationen zu einem spezifischen Ladevorgang, insbesondere die Anfangsenergiemenge und die Endenergiemenge für einen Ladevorgang vom Nutzer selbst überprüft werden können.

Die Eingabeeinrichtung kann als Teil des Sicherheitsmoduls ausgebildet und/oder in dem Sicherheitsgehäuse angeordnet sein. Die Eingabeeinrichtung kann dann vorteilhaft unmittelbar mit dem Sicherheitsprozessor des Sicherheitsmoduls interagieren. Eine Kommunikation mittelbar über die Zentralsteuereinheit, die Steuerungsleitung und die zweite Datenleitungsschnittstelle können entfallen. Die Eingabeeinrichtung ist dann zusätzlich zu optionalen weiteren Betätigungselementen der Ladestation vorgesehen.

An der Ladestation ohnehin vorgesehene Eingabemittel, beispielsweise eine Tastatur oder ein Taster können zugleich als Eingabeeinrichtung für das Sicherheitsmodul dienen. Ebenso kann eine Funkschnittstelle der Ladestation oder eine optische Schnittstelle zugleich als Eingabemittel für das Sicherheitsmodul dienen. Den ohnehin vorgesehenen Eingabemitteln kommt insofern eine Doppelfunktion zu. Sie dienen zum einen der Bedienung der Ladestation in üblicher Weise durch den Nutzer und zugleich als Eingabeeinrichtung für das Sicherheitsmodul und hier insbesondere zur Eingabe eines Prüfsignals für den Nutzer.

Die Eingabeeinrichtung kann wenigstens zwei Eingabetasten vorsehen, welche vorzugsweise als kapazitiv wirksame Eingabetasten ausgebildet sind.

Die Eingabeeinrichtung kann in dem Vorrichtungsgehäuse der Ladestation derart angeordnet sein, dass sie von einem außenstehenden Nutzer betätigbar ist, der keinen Zugriff auf die in dem Vorrichtungsgehäuse verbauten und unzugängigen Funktionskomponenten der Ladestation hat und der - anders als beispielsweise ein Wartungstechniker - nicht über die Möglichkeit verfügt, eine Tür oder Klappe des Vorrichtungsgehäuses zu öffnen.

Die Datenanzeigeeinrichtung des Sicherheitsmoduls dient insbesondere zur Überprüfung der abrechnungsrelevanten Daten eines Ladevorgangs, welche in dem Sicherheitsdatenspeicher des Sicherheitsmoduls abgelegt sind. Es ist insofern insbesondere vorgesehen, dass bei einer Überprüfung durch den Nutzer in dem Sicherheitsdatenspeicher abgelegte Daten überprüft werden und die im Sicherheitsdatenspeicher abgelegten Daten und/oder eine Prüfrückmeldung für den Nutzer von der Datenanzeigeeinrichtung angezeigt werden.

Da die Datenanzeigeeinrichtung als zugriffsgeschützte Komponente des Sicherheitsmoduls vorgesehen und von dem Sicherheitsgehäuse des Sicherheitsmoduls - jedenfalls abschnittsweise umgriffen - angeordnet ist, ist nach einer Weiterbildung der Erfindung vorgesehen, dass an dem Vorrichtungsgehäuse der Ladestation eine Ausnehmung vorgesehen ist und dass die Ausnehmung der Datenanzeigeeinrichtung des Sicherheitsmoduls derart zugeordnet ist, dass die Datenanzeigeeinrichtung von einem außenstehenden Nutzer durch die Ausnehmung des Vorrichtungsgehäuses hindurch einsehbar ist. Es ist insofern vorteilhaft eine besondere Sicherung gegen eine missbräuchliche Manipulation realisiert und das Sicherheitsmodul gegen einen unautorisierten Zugriff geschützt. Beispielsweise kann im Bereich der Ausnehmung eine transparente Scheibe vorgesehen sein, die einen unmittelbaren mechanischen Zugriff auf das Sicherheitsmodul im Sinne eines Berührschutzes verhindert. Die Ausnehmung an dem Vorrichtungsgehäuse kann überdies so vorgesehen sein und/oder das Sicherheitsmodul in dem Vorrichtungsgehäuse der Ladestation so angeordnet sein, dass von außen durch die Ausnehmung hindurch eine Plombe für das Sicherheitsgehäuse und/oder ein Prüfsiegel (Zertifizierungsstempel, Sicherheitsetikette) und/oder eine Seriennummer des Sicherheitsmoduls sichtbar sind. Ebenso kann ein Laufwerk des Energiezählers beziehungsweise ein Datenanzeigemodul des Energiezählers durch die Ausnehmung hindurch sichtbar sein.

Für den Betrieb der Ladestation ist es gewünscht, dass der Nutzer sich regelmäßig über den Fortgang des Ladevorgangs informieren kann. Zu diesem Zweck benötigt die Zentralsteuereinheit der Ladestation eine regelmäßige Information über den aktuellen Zählerstand. Die Zentralsteuereinheit kann die Information über den aktuellen Zählerstand beispielsweise mittelbar über die Steuerungsleitung von dem Sicherheitsmodul erhalten. Beispielsweise kann eine zusätzliche Datenleitung vorgesehen sein, über die der Energiezähler und die Zentralsteuereinheit verbunden sind und über die der aktuelle Zählerstand übertragen wird. Die sichere Datenleitung und/oder die zusätzliche Datenleitung und/oder die Steuerungsleitung können als separate Leitungen einer Punkt-zu-Punkt-Verkabelung und/oder als Leitungen in einem Bussystem ausgebildet sein.

Zur Lösung der Aufgabe umfasst das erfindungsgemäße Betriebsverfahren für eine Ladestation die folgenden Schritte:
- es wird ein Startsignal als Betätigungssignal für einen Ladevorgang empfangen und an eine Zentralsteuereinheit der Ladestation geleitet;
- von der Zentralsteuereinheit wird anlässlich des Empfangs des Startsignals ein Schaltelement betätigt zum Aktivieren des Ladevorgangs;
- von der Zentralsteuereinheit wird anlässlich des Empfangs des Startsignals ein erstes Triggersignal erzeugt und rückwirkungsfrei an einen Sicherheitsprozessor eines Sicherheitsmoduls der Ladestation gesendet;
- über eine Ladeleitung der Ladestation wird nach dem Aktivieren an einem Steckelement der Ladestation die elektrische Energie bereitgestellt;
- mittels eines geeichten Energiezählers wird eine über die Ladeleitung insgesamt bereitgestellte Energiemenge erfasst;
- ein aktueller Zählerstand des Energiezählers wird über eine gesicherte Datenleitung von dem Energiezähler an den Sicherheitsprozessor des Sicherheitsmoduls übertragen;
- von dem Sicherheitsprozessor des Sicherheitsmoduls wird beim Empfang des ersten Triggersignals der aktuelle Zählerstand des Energiezählers als Anfangsenergiemenge in einen Sicherheitsdatenspeicher des Sicherheitsmoduls geschrieben;
- zur Beendigung des Ladevorgangs wird ein Stoppsignal als Betätigungssignal empfangen und an die Zentralsteuereinheit der Ladestation geleitet;
- von der Zentralsteuereinheit wird anlässlich des Empfangs des Stoppsignals das Schaltelement betätigt zum Deaktivieren des Ladevorgangs;
- von der Zentralsteuereinheit wird anlässlich des Empfangs des Stoppsignals ein zweites Triggersignal erzeugt und rückwirkungsfrei an den Sicherheitsprozessor des Sicherheitsmoduls übertragen;
- von dem Sicherheitsprozessor wird beim Empfang des zweiten Triggersignals der aktuelle Zählerstand des Energiezählers als Endenergiemenge in den Sicherheitsdatenspeicher des Sicherheitsmoduls geschrieben.

Der besondere Vorteil der Erfindung besteht darin, dass bei der Durchführung des Ladevorgangs unmittelbar zu Beginn und bei der Beendigung desselben der jeweils aktuelle Zählerstand eines geeichten Energiezählers der Ladestation in einem Sicherheitsdatenspeicher manipulationsgeschützt abgelegt und gespeichert wird. Es ist insofern gewährleistet, dass zu jedem späteren Zeitpunkt die abrechnungsrelevanten Zählerstände abgerufen und überprüft werden können. Eine eichrechtskonforme Abrechnung des Ladevorgangs ist insofern gewährleistet, ohne dass ein Papierbeleg hergestellt werden muss.

Die Zentralsteuereinheit überträgt erfindungsgemäß ein erstes Triggersignal beim Beginn des Ladevorgangs und ein zweites Triggersignal bei der Beendigung des Ladevorgangs rückwirkungsfrei an einen Sicherheitsprozessor des Sicherheitsmoduls, der mit dem Sicherheitsdatenspeicher zusammenwirkt. Die Triggersignale werden erzeugt, sobald ein Startsignal als ein erstes Betätigungssignal für die Ladestation beziehungsweise ein Stoppsignal als ein zweites Betätigungssignal für die Ladestation empfangen und an die Ladestation geleitet werden.

Erfindungsgemäß können das Startsignal und/oder das Stoppsignal (Betätigungssignale) in sehr unterschiedlicher Weise erzeugt werden. Beispielsweise können das Startsignal und/oder das Stoppsignal von einem Benutzer manuell erzeugt werden, indem ein Betätigungselement betätigt wird oder eine Kundenkarte eingelesen wird. Beispielsweise können die Betätigungssignale von einem mit der Ladestation verbundenen Fahrzeug bereitgestellt werden. Beispielsweise kann insbesondere das Stoppsignal erzeugt werden, wenn eine Verbindung zwischen dem Steckelement und dem Gegensteckelement getrennt wird.

Es kann insbesondere vorgesehen sein, dass nach dem Empfang des Startsignals die Zentralsteuereinheit zuerst das erste Triggersignal an das Sicherheitsmodul sendet, sodass dort der aktuelle Zählerstand des geeichten Energiezählers als Anfangsenergiemenge (Anfangszählerstand) gespeichert wird und dann der Ladevorgang aktiviert wird durch Betätigung des Schaltelements. In analoger Weise kann vorgesehen sein, dass beim Empfang des Stoppsignals zunächst das Schaltelement betätigt wird zum Deaktivieren des Ladevorgangs und dann das zweite Triggersignal an das Sicherheitsmodul gesendet wird. Dort wird folglich die Endenergiemenge (Endzählerstand) für den Ladevorgang gespeichert, nachdem der Ladevorgang beendet und das Schaltelement betätigt ist.

Beispielsweise kann vorgesehen sein, dass das Schaltelement nach dem Empfang des Startsignals erst betätigt wird, sofern über einen an der Ladestation vorgesehenen Sensor festgestellt ist, dass das Fahrzeug an die Ladestation angeschlossen ist beziehungsweise ein Gegensteckelement mit dem Steckelement der Ladestation verbunden ist. Beispielsweise kann nach der Erfindung vorgesehen sein, dass die Unterbrechung der elektrisch leitenden Verbindung von der Ladestation zum Fahrzeug als Stoppsignal erkannt beziehungsweise aufgefasst wird.

Optional kann ein Unterbrechungssignal als ein zusätzliches Betätigungssignal bereitgestellt sein. Anlässlich des Empfangs des Unterbrechungssignals kann von dem Sicherheitsmodul ein Zwischenzählerstand als Unterbrechungsenergiemenge in dem Sicherheitsdatenspeicher gespeichert werden.

Nach einer bevorzugten Ausführungsform der Erfindung wird zusammen mit dem Betätigungssignal eine ID empfangen, welche zur Identifizierung des Nutzers und/oder eines Rechnungsempfängers dient. Insbesondere kann die ID von der Betätigungseinrichtung empfangen werden. Die ID wird von der Zentralsteuereinheit an den Sicherheitsprozessor des Sicherheitsmoduls gesendet und zusammen mit der Anfangsenergiemenge und der Endenergiemenge in dem Sicherheitsdatenspeicher des Sicherheitsmoduls geschrieben. Insbesondere kann vorgesehen sein, dass die ID zusammen mit der Anfangsenergiemenge und der Endenergiemenge in einem Datenarray gemeinsam gespeichert werden.

Nach einer Weiterbildung der Erfindung werden zusätzlich zu dem Anfangszählerstand und dem Endzählerstand sowie der optional erfassten ID das Datum und die Uhrzeit ermittelt, gespeichert und/oder angezeigt, zu der der Ladevorgang beginnt. In Ergänzung dessen können beispielsweise das Datum und die Uhrzeit des Endes des Ladevorgangs und/oder eine Ladedauer ermittelt, gespeichert und/oder angezeigt werden. Die Ladedauer kann insbesondere ermittelt werden, indem eine Zeitmessung beim Start des Ladevorgangs beginnt und beim Ende des Ladevorgangs beendet wird.

Nach einer Weiterbildung der Erfindung kann vorgesehen sein, dass zur Bestimmung der Ladedauer eine geeichte Zeiterfassungs- beziehungsweise Messvorrichtung verwendet wird. Die geeichte Zeiterfassungs- beziehungsweise Messvorrichtung kann als Teil des Sicherheitsmoduls oder als separate Funktionskomponente ausgeführt sein. Die Messwerte für die Ladedauer werden in dem Sicherheitsdatenspeicher des Sicherheitsmoduls manipulationsgeschützt abgelegt beziehungsweise gespeichert. Die Speicherung kann zusammen mit dem Datum und der Uhrzeit des Beginns und/oder des Endes des Ladevorgangs erfolgen.

Nach einer Weiterbildung der Erfindung wird der aktuelle Zählerstand von dem Energiezähler exklusiv über die gesicherte Datenleitung an den Sicherheitsprozessor des Sicherheitsmoduls übertragen. Vorteilhaft ergibt sich hierdurch eine besonders hohe Sicherheit, da einer Manipulation der Zählerstände vorgebeugt ist und der Energiezähler allein über die gesicherte Datenleitung mit den weiteren Funktionskomponenten der Ladestation und insbesondere mit dem Sicherheitsmodul interagiert. Der Energiezähler ist dann nicht über eine zusätzliche Datenleitung unmittelbar mit der Zentralsteuereinheit verbunden.

Nach einer Weiterbildung der Erfindung wird der aktuelle Zählerstand von dem Sicherheitsmodul an die Zentralsteuereinheit übertragen. Es ergibt sich insofern eine mittelbare Übertragung der aktuellen Zählerstände an die Zentralsteuereinheit. Vorteilhaft ist gewährleistet, dass die der Zentralsteuereinheit übertragenen aktuellen Zählerstände mit den aktuellen Zählerständen des Sicherheitsmoduls übereinstimmen. Einer Manipulation ist insofern besonders effektiv vorgebeugt. Darüber hinaus sinkt der mechanische Verkabelungsaufwand, da die mittelbare Kommunikation über die gesicherte Datenleitung einerseits und die Steuerungsleitung andererseits erfolgen kann.

Zusätzlich zu dem aktuellen Zählerstand kann von dem Energiezähler eine Information über die aktuellen Werte der Spannung, des Stroms, der elektrischen Leistung oder dergleichen zur Verfügung gestellt werden. Diese Werte können dann von der Zentralsteuereinheit verarbeitet und zur Überwachung beziehungsweise Beeinflussung des Ladevorgangs verwendet werden. Optional kann eine Speicherung in dem Sicherheitsmodul oder bevorzugt in einem Zentralspeicher der Ladestation vorgesehen werden.

Im Rahmen der Überprüfung einer dem Rechnungsempfänger in Rechnung gestellten Energiemenge beziehungsweise der korrekten Abrechnung insgesamt können über die dem Sicherheitsmodul zugeordnete Eingabeeinrichtung zum einen die auf der Rechnung ausgewiesene Anfangsenergiemenge und zum anderen die auf der Rechnung ausgewiesene, der Anfangsenergiemenge zugeordnete Endenergiemenge als Prüfsignale vom Nutzer eingegeben werden. Die eingegebene Anfangsenergiemenge und die Endenergiemenge werden mit den in dem Sicherheitsdatenspeicher gespeicherten Anfangsenergiemengen und Endenergiemengen verglichen. Bei einer Übereinstimmung der eingegebenen Energiemengen mit den gespeicherten Energiemengen wird eine positive Prüfrückmeldung an den Nutzer herausgegeben. Es kann insbesondere vorgesehen sein, dass die eingegebene Anfangsenergiemenge und/oder die eingegebene Endenergiemenge und/oder die in dem Sicherheitsdatenspeicher gespeicherte Anfangsenergiemenge und/oder die in dem Sicherheitsdatenspeicher gespeicherte Endenergiemenge und/oder die positive Prüfrückmeldung von der Datenanzeigeeinrichtung des Sicherheitsmoduls angezeigt werden. Die Anzeige der Daten erfolgt so, dass der Nutzer die Daten von außen visuell prüfen kann, insbesondere mithilfe der an dem Vorrichtungsgehäuse vorgesehenen Ausnehmung.

Eine Überprüfung der Rechnung kann beispielsweise auch anhand der Zeitdaten erfolgen. Insofern können optional das Datum und die Uhrzeit abgespeichert werden, an dem der Ladevorgang gestartet wurde. Zusätzlich können das Datum und die Uhrzeit, an dem der Ladevorgang beendet wurde und/oder die Dauer des Ladevorgangs gespeichert werden. Eine Überprüfung der Rechnung kann dann beispielsweise erfolgen, indem auf der Rechnung ausgewiesene Datums- und Zeitangaben als Prüfsignale vom Nutzer eingegeben und mit den gespeicherten Werten verglichen werden.

Nach einer Weiterbildung der Erfindung kann von der Zentralsteuereinheit ein Auslesesignal rückwirkungsfrei an das Sicherheitsmodul gesendet und von dem Sicherheitsprozessor derart verarbeitet werden, dass der Sicherheitsdatenspeicher ausgelesen wird und alle oder einzelne in dem Sicherheitsdatenspeicher gespeicherten Energiemengen und/oder ID an die Zentralsteuereinheit übertragen werden. Die Übertragung des Auslesesignals und der gespeicherten Energiemengen und/oder ID erfolgt insbesondere über die Steuerungsleitung sowie die zweite Datenleitungsschnittstelle.

Vorteilhaft kann durch das Vorsehen einer Ausleseroutine und das Senden des Auslesesignals der Sicherheitsdatenspeicher ausgelesen und im ersten Schritt alle abrechnungsrelevanten, dort gespeicherten Daten an die Zentralsteuereinheit übertragen werden. Es kann dann in einem weiteren Schritt vorgesehen sein, dass diese Daten von der Zentralsteuereinheit an eine übergeordnete und insbesondere ortsferne Abrechnungsstelle übertragen werden, wo dann die verschiedenen Ladevorgänge abgerechnet und Rechnungen erstellt werden. Überdies kann vorgesehen sein, dass speziell ein einzelner Ladevorgang überprüft wird. Dies kann beispielsweise erfolgen, wenn zu einer speziellen Rechnung oder einem einzelnen, auf der Rechnung ausgewiesenen Ladevorgang ein Widerspruch eingeht. Die speziellen Rechnungspositionen können dann individuell überprüft werden. Sofern die Überprüfung ergibt, dass ein Fehler nicht vorliegt, kann eine Überprüfung vor Ort vorgesehen werden, um die Vorbehalte des Rechnungsempfängers auszuräumen.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: ein Blockschaltbild einer Ladestation mit einem Sicherheitsmodul und
- Fig. 2: eine Detaillierung des Sicherheitsmoduls der Ladestation nach Fig. 1.

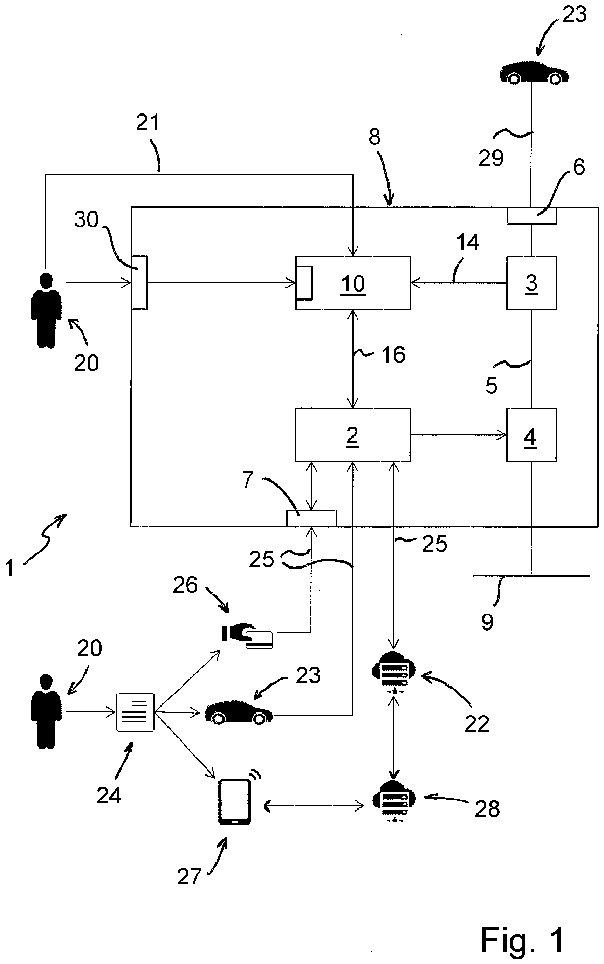

Eine Ladestation 1 nach Fig. 1 umfasst als funktionswesentliche Komponenten eine Zentralsteuereinheit 2, einen geeichten Energiezähler 3, ein Schaltelement 4 zum Schalten einer Ladeleitung 5 sowie ein mit der Ladeleitung 5 verbundenes Steckelement 6 und eine Nutzerinteraktionsschnittstelle 7. Die Funktionskomponenten sind einem Vorrichtungsgehäuse 8 der Ladestation 1 zugeordnet. Die Ladeleitung 5 ist an ein externes Versorgungsnetz 9 angeschlossen.

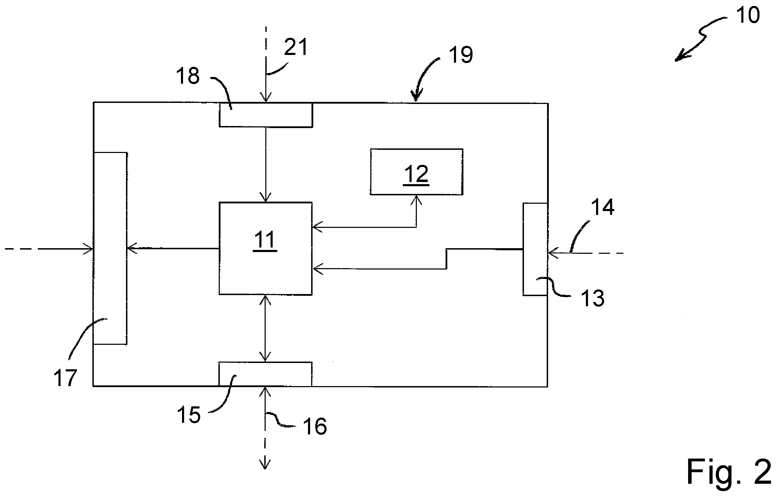

Zusätzlich ist in dem Vorrichtungsgehäuse 8 der Ladestation 1 ein Sicherheitsmodul 10 vorgesehen, welches im Detail in Fig. 2 dargestellt ist. Das Sicherheitsmodul 10 sieht einen Sicherheitsprozessor 11 und einen mit dem Sicherheitsprozessor 11 zusammenwirkenden Sicherheitsdatenspeicher 12 vor. Des Weiteren ist eine erste Datenleitungsschnittstelle 13 vorgesehen, die dazu dient, das Sicherheitsmodul 10 über eine gesicherte Datenleitung 14 mit dem Energiezähler 3 zu verbinden. Des Weiteren ist eine zweite Datenleitungsschnittstelle 15 an dem Sicherheitsmodul 10 vorgesehen. Die zweite Datenleitungsschnittstelle 15 dient der Verbindung des Sicherheitsmoduls 10 mit der Zentralsteuereinheit 2 über eine Steuerungsleitung 16. Der Sicherheitsprozessor 11 wirkt zudem mit einer Datenanzeigeeinrichtung 17 des Sicherheitsmoduls 10 zusammen. Die Datenanzeigeeinrichtung 17 ist ausgebildet zur Anzeige von Daten, welche in dem Sicherheitsdatenspeicher 12 abgelegt sind und/oder zur Anzeige einer Prüfrückmeldung. Des Weiteren ist als Teil des Sicherheitsmoduls 10 eine Eingabeeinrichtung 18 vorgesehen, welche ausgebildet ist zum Empfang eines Prüfsignals 21 von einem außenstehenden Nutzer 20 ohne Zugriff auf das Innere der Ladestation 1. Der Sicherheitsprozessor 11, der Sicherheitsdatenspeicher 12, die erste Datenleitungsschnittstelle 13, die zweite Datenleitungsschnittstelle 15, die Datenanzeigeeinrichtung 17 sowie die Eingabeeinrichtung 18 des Sicherheitsmoduls 10 sind in einem Sicherheitsgehäuse 19 des Sicherheitsmoduls 10 vorgesehen. Das Sicherheitsgehäuse 19 des Sicherheitsmoduls 10 ist mechanisch gegen einen unautorisierten Zugriff geschützt und insbesondere verplombt ausgeführt. Aufgrund der Verplombung des Sicherheitsgehäuses 19 kann eine Manipulation des Sicherheitsmoduls 10 nachgewiesen werden.

Die Zentralsteuereinheit 2 umfasst beispielsweise einen nicht separat dargestellten Zentralprozessor zur Steuerung der Ladestation 1 sowie einen Zentralspeicher (ebenfalls nicht dargestellt), in dem Funktionsparameter der Ladestation 1 und/oder Daten zum Ladevorgang jedenfalls temporär abgespeichert sind. Darüber hinaus verfügt die Ladestation 1 über ein nicht dargestelltes Sende- und Empfangsmodul, welches mit der Zentralsteuereinheit 2 zusammenwirkt und mit einer ortsfern von der Ladestation vorgesehenen Zentralstation 22 des Betreibers der Ladestation 1 kommuniziert. Insbesondere die Nutzerinteraktionsschnittstelle 7 und die Sende- und Empfangseinheit sind Teil einer zum Entgegennehmen von Betätigungssignalen ausgebildeten Betätigungseinrichtung.

Will der Nutzer 20 nun ein elektrisch betreibbares Fahrzeug 23 an der Ladestation 1 laden, hat er hierzu die Möglichkeit, falls er über einen Vertrag 24 mit dem Betreiber der Ladestation 1 verbunden ist. Der Vertrag 24 muss nicht auf ihn selbst lauten. Beispielsweise kann es sich um einen Firmenvertrag oder Flottenvertrag handeln, den der Nutzer 20 beziehungsweise das Fahrzeug 23 in Anspruch nehmen kann.

Es ist dann weiter so, dass von dem Nutzer 20 ein Betätigungssignal 25 an die Ladestation 1 gesendet und dieses Signal von der Betätigungseinrichtung empfangen und an die Zentralsteuereinheit 2 geleitet wird. Das Betätigungssignal 25 kann beispielsweise generiert werden, indem der Nutzer 20 mithilfe einer ID-Karte 26 über die Nutzerinteraktionsschnittstelle 7 mit der Ladestation 1 kommuniziert und der Ladestation 1 auf diese Weise eine eindeutige, den Betreiber der Ladestation 1 zur Abrechnung des Ladevorgangs befähigende ID mitteilt. Beispielsweise kann das Betätigungssignal 25 von dem Fahrzeug 23 an die Ladestation 1 übertragen werden. Beispielsweise kann das Betätigungssignal 25 über ein mobiles Endgerät 27 des Nutzers 20 bevorzugt über die Zentralstation 22 und optional zusätzlich über eine Datenstation 28 eines Vertragspartners des Nutzers 20 (Mobility Service Provider) gesendet werden. Jeweils wird die ID auch bei der Übertragung des Betätigungssignals 25 von dem Fahrzeug 23 beziehungsweise dem mobilen Endgerät 27 an die Ladestation 1 übertragen.

Das Betätigungssignal 25 wird von der Zentralsteuereinheit 2 der Ladestation 1 empfangen. Die Zentralsteuereinheit 2 sendet nach dem Empfang des Betätigungssignals 25 (Startsignal) über die Steuerungsleitung 16 ein erstes Triggersignal an das Sicherheitsmodul 10. Von dem Sicherheitsmodul 10 wird beim Empfang des ersten Triggersignals ein über die sichere Datenleitung 14 empfangener aktueller Zählerstand des Energiezählers 3 als Anfangsenergiemenge in den Sicherheitsdatenspeicher 12 geschrieben und dort dauerhaft gespeichert. Bevorzugt wird mit der Übertragung des ersten Triggersignals von der Zentralsteuereinheit 2 an das Sicherheitsmodul 10 zusätzlich die ID an das Sicherheitsmodul 10 übertragen. Die ID wird nach der bevorzugten Ausführungsform zusammen mit der Anfangsenergiemenge in dem Sicherheitsdatenspeicher 12 gespeichert. Ebenfalls wird von der Zentralsteuereinheit 2 das der Ladeleitung 5 zugeordnete Schaltelement 4 betätigt und der Ladevorgang für das Fahrzeug 23 aktiviert. Durch die Aktivierung des Ladevorgangs ist elektrische Energie an dem Steckelement 6 bereitgestellt. Das Laden des Fahrzeugs 23 erfolgt dann über ein externes Ladekabel 29, welches mit dem Steckelement 6 der Ladestation einerseits und einem nicht separat dargestellten, dem Fahrzeug 23 zugeordneten Gegensteckelement andererseits verbunden ist.

Nach der Durchführung des Ladevorgangs empfängt die Zentralsteuereinheit 2 ein Stoppsignal als weiteres Betätigungssignal 25. Es wird dann ein weiteres Mal das Schaltelement 4 betätigt zum Deaktivieren des Ladevorgangs beziehungsweise zum Unterbrechen der Ladeleitung 5. Des Weiteren wird über die Steuerungsleitung 16 von der Zentralsteuereinheit 2 ein zweites Triggersignal an das Sicherheitsmodul 10 übertragen. Beim Empfang des zweiten Triggersignals schreibt der Sicherheitsprozessor 11 des Sicherheitsmoduls 10 den über die sichere Datenleitung 14 empfangenen aktuellen Zählerstand des Energiezählers 3 in den Sicherheitsdatenspeicher 12 des Sicherheitsmoduls 10. Für den Ladevorgang sind insofern also die Anfangsenergiemenge und die Endenergiemenge und bevorzugt auch die ID dauerhaft in dem Sicherheitsdatenspeicher 12 hinterlegt.

Um den Nutzer 20 den gewünschten Komfort bei der Durchführung des Ladevorgangs zu bieten und insbesondere Verlaufsdaten zu dem Ladevorgang beispielsweise auf dem mobilen Endgerät 27 zur Verfügung stellen zu können, wird der aktuelle Zählerstand von dem Energiezähler 3 fortlaufend erfasst. Vorliegend ist es so, dass der aktuelle Zählerstand über die sichere Datenleitung 14 zunächst an das Sicherheitsmodul 10 und von dort über die zweite Datenleitungsschnittstelle 15 und die Steuerungsleitung 16 an die Zentralsteuereinheit 2 übertragen wird. Die Zentralsteuereinheit 2 kann dann beispielsweise über die Zentralstation 22 und die Datenstation 28 Informationen zum Ladevorgang auf das mobile Endgerät 27 des Nutzers 20 übertragen.

Um die Sicherheit des Ladevorgangs und seine eichrechtskonforme Abrechnung gegenüber dem Nutzer 20 beziehungsweise einem Vertragspartner zu gewährleisten, ist über das Vorsehen des Sicherheitsgehäuses 19 hinaus Vorkehrung getroffen. Zum einen ist die sichere Datenleitung 14 beispielsweise mechanisch gegen einen unautorisierten Zugriff und/oder Manipulation gesichert und/oder verplombt ausgebildet mit der Folge, dass ein unautorisierter Zugriff nachgewiesen werden kann. Alternativ oder zusätzlich können die Zählerstände von dem Energiezähler 3 über die sichere Datenleitung 14 signiert und damit gegen Manipulation geschützt an das Sicherheitsmodul 10 übertragen werden. Die sichere Datenleitung 13 dient insbesondere der monodirektionalen Übertragung von Daten. Eine Übertragung ist insofern allein von dem Energiezähler 3 zu dem Sicherheitsmodul 10 möglich. Eine Übertragung von Daten von dem Sicherheitsmodul 10 über die erste Datenleitungsschnittstelle 13 nach außen ist aufgrund der Ausbildung der Schnittstelle nicht möglich.

Die zweite Datenleitungsschnittstelle 15 ist rückwirkungsfrei ausgebildet im Sinne der PTB-A 50.7 der Physikalisch Technischen Bundesanstalt und der Anhänge zu diesem Dokument. Über die zweite Datenleitungsschnittstelle 15 können nur vorab spezifizierte Informationen beziehungsweise Abfragen empfangen und übertragen werden. Ein unautorisierter Zugriff über die zweite Datenleitungsschnittstelle 15 und insbesondere eine Manipulation der Verarbeitungsroutinen in dem Sicherheitsmodul 10 und/oder eine Änderung der in dem Sicherheitsdatenspeicher 12 abgelegten Daten ist nicht möglich.

Der Nutzer 20 hat zudem die Möglichkeit, zeitversetzt zum Ladevorgang insbesondere nach dem Erhalt einer Rechnung die korrekte Abrechnung des Ladevorgangs zu überprüfen. Als Teil der Ladestation 1 und insbesondere als Teil des Sicherheitsmoduls 10 ist hierzu eine Eingabeeinrichtung 18 vorgesehen. Die Eingabeeinrichtung 18 sieht beispielsweise wenigstens zwei kapazitive Eingabetasten vor, über die der Nutzer 20 eine auf der Rechnung ausgewiesene Anfangsenergiemenge sowie eine auf der Rechnung ausgewiesene Endenergiemenge eingeben kann. Über den Sicherheitsprozessor 11 des Sicherheitsmoduls 10 wird dann geprüft, ob entsprechend korrespondierende Werte für die Anfangsenergiemenge und die Endenergiemenge in dem Sicherheitsdatenspeicher 12 des Sicherheitsmoduls 10 gespeichert sind. Abhängig vom Ergebnis der Überprüfung wird dann eine positive oder eine negative Prüfrückmeldung erzeugt. Die Prüfrückmeldung und optional zusätzlich die Anfangsenergiemenge und/oder die Endenergiemenge werden von dem Sicherheitsprozessor 11 an die Datenanzeigeeinrichtung 17 des Sicherheitsmoduls 10 übertragen und visualisiert. Der Nutzer 20 kann die Anzeige über eine Ausnehmung 30, welche korrespondierend zur Lage der Datenanzeigeeinrichtung 17 an dem Vorrichtungsgehäuse 8 der Ladestation 1 vorgesehen ist, einsehen und prüfen. Es ist dem Nutzer 20 insofern stets möglich, die manipulationsgeschützt in dem Sicherheitsdatenspeicher 12 des Sicherheitsmoduls 10 gespeicherten, abrechnungsrelevanten Daten einzusehen und die korrekte Rechnungsstellung zu überprüfen.

Um die Sicherheit für den Nutzer 20 weiter zu verbessern und einer Manipulation vorzubeugen beziehungsweise eine Manipulation transparent zu machen, können insbesondere über die Ausnehmung 30 an dem Vorrichtungsgehäuse 8 eine Plombe für das Sicherheitsgehäuse 19 des Sicherheitsmoduls 10 und/oder ein Prüfsiegel und/oder eine der sicheren Datenleitung 14 zugeordnete Plombe eingesehen werden. Der Nutzer 20 kann insofern den ordnungsgemäßen Zustand der Ladevorrichtung und insbesondere der sicheren Datenleitung 14 und/oder des Sicherheitsmoduls 10 selbst in Augenschein nehmen.

Als Komfortfunktion insbesondere für den Betreiber der Ladestation 1 kann vorgesehen sein, dass von der Zentralsteuereinheit 2 die in dem Sicherheitsdatenspeicher 12 gespeicherten abrechnungsrelevanten Parameter für einen einzelnen Ladevorgang oder für alle Ladevorgänge über die zweite Datenleitungsschnittstelle 15 und die Steuerungsleitung 16 aus dem Sicherheitsmodul 10 ausgelesen und über die Zentralsteuereinheit 2 an die Zentralstation 22 übertragen werden. Dort können die abrechnungsrelevanten Daten zur Erstellung der Rechnung aufbereitet oder zur Prüfung eines Widerspruchs des Nutzers 20 verwendet werden.

Die Erfindung ist nicht auf die dargestellte beispielhafte Gestalt der Ladestation 1 sowie das dargestellte Betriebsverfahren für die Ladestation 1 beschränkt.

Es kann beispielsweise vorgesehen sein, dass zwischen der Zentralsteuereinheit 2 und dem Energiezähler 3 der Ladestation 1 eine zusätzliche Datenleitung vorgesehen ist, über die der aktuelle Zählerstand von dem Energiezähler 3 unter Umgehung des Sicherheitsmoduls 10 an die Zentralsteuereinheit 2 übertragen wird.

Beispielsweise können die sichere Datenleitung 14 und/oder die zusätzliche Datenleitung und/oder die Steuerungsleitung 16 als Bussystem beziehungsweise Teil desselben ausgebildet sein.

Als Fahrzeuge im Sinne der Erfindung gelten alle Automobile (PKW, LKW, Wohnmobile, Zweiräder, Busse, Transporter usw.), Schienenfahrzeuge (insbesondere Lokomotiven), Wasserfahrzeuge (Schiffe), Luftfahrzeuge sowie Anhänger (Wohnanhänger), mobile Verkaufsstände usw. Die Ladestation kann ebenso verwendet werden zum Bereitstellen von elektrischer Energie für Fahrzeuge mit und ohne Energiespeicher.

Gleiche Bauteile und Bauteilfunktionen sind durch gleiche Bezugszeichen gekennzeichnet.

## Patentansprüche

1. Betriebsverfahren für eine zur Bereitstellung elektrischer Energie für ein elektrisch betreibbares Fahrzeug (23) ausgebildete Ladestation (1), umfassend die folgenden Schritte:
- es wird ein Startsignal als Betätigungssignal (25) für einen Ladevorgang empfangen und an eine Zentralsteuereinheit (2) der Ladestation (1) geleitet;
- von der Zentralsteuereinheit (2) wird anlässlich des Empfangs des Startsignals ein Schaltelement (4) betätigt zum Aktivieren des Ladevorgangs;
- von der Zentralsteuereinheit (2) wird anlässlich des Empfangs des Startsignals ein erstes Triggersignal erzeugt und rückwirkungsfrei an einen Sicherheitsprozessor (11) eines Sicherheitsmoduls (10) der Ladestation (1) gesendet;
- über eine Ladeleitung (5) der Ladestation (1) wird nach dem Aktivieren an einem Steckelement (6) der Ladestation (1) die elektrische Energie bereitgestellt;
- mittels eines geeichten Energiezählers (3) wird eine über die Ladeleitung (5) insgesamt bereitgestellte Energiemenge erfasst;
- ein aktueller Zählerstand des Energiezählers (3) wird über eine gesicherte Datenleitung (14) von dem Energiezähler (3) an den Sicherheitsprozessor (11) des Sicherheitsmoduls (10) übertragen;
- von dem Sicherheitsprozessor (11) des Sicherheitsmoduls (10) wird beim Empfang des ersten Triggersignals der aktuelle Zählerstand des Energiezählers (3) als Anfangsenergiemenge in einen Sicherheitsdatenspeicher (12) des Sicherheitsmoduls (10) geschrieben;
- zur Beendigung des Ladevorgangs wird ein Stoppsignal als Betätigungssignal (25) empfangen und an die Zentralsteuereinheit (2) der Ladestation (1) geleitet;
- von der Zentralsteuereinheit (2) wird anlässlich des Empfangs des Stoppsignals das Schaltelement (4) betätigt zum Deaktivieren des Ladevorgangs;
- von der Zentralsteuereinheit (2) wird anlässlich des Empfangs des Stoppsignals ein zweites Triggersignal erzeugt und rückwirkungsfrei an den Sicherheitsprozessor (11) des Sicherheitsmoduls (10) übertragen;
- von dem Sicherheitsprozessor (11) wird beim Empfang des zweiten Triggersignals der aktuelle Zählerstand des Energiezählers (3) als Endenergiemenge in den Sicherheitsdatenspeicher (12) des Sicherheitsmoduls (10) geschrieben.

2. Betriebsverfahren nach Anspruch 1, **dadurch gekennzeichnet, dass** mit dem Betätigungssignal (25) eine zur Identifizierung eines Rechnungsempfängers dienende ID empfangen wird und die ID von der Zentralsteuereinheit (2) an den Sicherheitsprozessor (11) des Sicherheitsmoduls (10) gesendet wird, wobei der Sicherheitsprozessor (11) die ID zusammen mit der Anfangsenergiemenge und der Endenergiemenge in den Sicherheitsdatenspeicher (12) des Sicherheitsmoduls (10) schreibt.

3. Betriebsverfahren nach Anspruch 1 oder 2, **dadurch gekennzeichnet, dass** von der Zentralsteuereinheit (2) beim Erzeugen des ersten Triggersignals und/oder von dem Sicherheitsprozessor (11) des Sichermoduls (10) beim Empfang des ersten Triggersignals das aktuelle Datum und die Uhrzeit ermittelt werden und in den Sicherheitsdatenspeicher (12) des Sicherheitsmoduls (10) geschrieben werden.

4. Betriebsverfahren nach einem der Ansprüche 1 bis 3, **dadurch gekennzeichnet, dass** von der Zentralsteuereinheit (2) beim Erzeugen des ersten Triggersignals und/oder von dem Sicherheitsprozessor (11) des Sicherheitsmoduls (10) beim Empfang des ersten Triggersignals eine Zeitmessung gestartet wird und dass von der Zentralsteuereinheit (2) beim Erzeugen des zweiten Triggersignals und/oder von dem Sicherheitsprozessor (11) des Sicherheitsmoduls (10) beim Empfang des zweiten Triggersignals die Zeitmessung gestoppt wird und dass eine im Rahmen der Zeitmessung bestimmte Ladedauer in den Sicherheitsdatenspeicher (12) des Sicherheitsmoduls (10) geschrieben wird.

5. Betriebsverfahren nach einem der Ansprüche 1 bis 4, **dadurch gekennzeichnet, dass**
- der aktuelle Zählerstand von dem Energiezähler (3) exklusiv über die gesicherte Datenleitung (14) an den Sicherheitsprozessor (11) des Sicherheitsmoduls (10) übertragen wird, und/oder
- die Übertragung des aktuellen Zählerstands an die Zentralsteuereinheit (2) mittelbar über das Sicherheitsmodul (10) erfolgt, und/oder
- der aktuelle Zählerstand des Energiezählers (3) über die gesicherte Datenleitung (14) an das Sicherheitsmodul (10) und zusätzlich über eine von dem Energiezähler (3) zu der Zentralsteuereinheit (2) geführte zusätzliche Datenleitung übertragen wird.

6. Betriebsverfahren nach einem der Ansprüche 1 bis 5, **dadurch gekennzeichnet, dass** zur Überprüfung einer dem Rechnungsempfänger in Rechnung gestellten Energiemenge über eine Eingabeeinrichtung (18) die auf einer Rechnung ausgewiesene Anfangsenergiemenge und/oder die auf der Rechnung ausgewiesene, der Anfangsenergiemenge zugeordnete Endenergiemenge und/oder das Datum und die Uhrzeit, zu dem der Ladevorgang gestartet wurde, und/oder die Dauer des Ladevorgangs und/oder das Datum und die Uhrzeit, zu dem der Ladevorgang beendet wurde, als ein Prüfsignal (21) eingegeben und von dem Sicherheitsprozessor (11) mit den in dem Sicherheitsdatenspeicher (12) gespeicherten Anfangsenergiemengen und Endenergiemengen, Datums- und Zeitangaben verglichen werden und dass bei einer Übereinstimmung der eingegebenen Werte und gespeicherten Werte für die Energiemengen und/oder das Datum und die Uhrzeit eine positive Prüfrückmeldung gegeben wird.

7. Betriebsverfahren nach einem der Ansprüche 1 bis 6, **dadurch gekennzeichnet, dass** die Zentralsteuereinheit (2) während des Ladevorgangs mittelbar von dem Sicherheitsmodul (10) und/oder unmittelbar von dem Energiezähler (3) regelmäßig den aktuellen Zählerstand und/oder die aktuelle Spannung und/oder die aktuelle Leistung und/oder den aktuellen Strom empfängt.

8. Betriebsverfahren nach einem der Ansprüche 1 bis 7, **dadurch gekennzeichnet, dass** von der Zentralsteuereinheit (2) ein Auslesesignal rückwirkungsfrei an das Sicherheitsmodul (10) gesendet wird, dass der Sicherheitsdatenspeicher (12) dann ausgelesen wird und dass alle oder einzelne in dem Sicherheitsdatenspeicher (12) gespeicherten Anfangsenergiemengen und/oder Endenergiemengen und/oder ID und/oder Datums- und Uhrzeitangaben und/oder Ladedauerangaben über eine Steuerungsleitung (16) an die Zentralsteuereinheit (2) übertragen werden.

9. Betriebsverfahren nach einem der Ansprüche 1 bis 8, **dadurch gekennzeichnet, dass** ein Gehäuse des Energiezähler (3) und ein Sicherheitsgehäuse (19) des Sicherheitsmoduls (10) aneinander angebaut werden und/oder dass der Energiezähler (3) und das Sicherheitsmodul (10) in dem Sicherheitsgehäuse (19) räumlich integriert vorgesehen werden und/oder dass die gesicherte Datenleitung (14) mechanisch gesichert und/oder verplombt ausgebildet wird und/oder dass die gesicherte Datenleitung (14) elektrisch gesichert wird, indem sie ausgebildet ist zur Übertragung signierter und/oder verschlüsselter Daten.

10. Betriebsverfahren (1) nach einem der Ansprüche 1 bis 9, **dadurch gekennzeichnet, dass** über die gesicherte Datenleitung (14) und die erste Datenleitungsschnittstelle (13) Daten von dem Energiezähler (3) zu dem Sicherheitsmodul (10) einerseits und von Sicherheitsmodul (10) zu dem Energiezähler (3) andererseits bidirektional übertragen werden und/oder dass das Sicherheitsgehäuse (19) und/oder das Gehäuse des Energiezählers (3) mechanisch gesichert und/oder verplombt ausgebildet werden zum Schutz gegen und/oder zum Nachweis von einen Zugriff auf die in den Gehäusen (19) vorgesehenen Funktionskomponenten des Sicherheitsmoduls (10) und/oder des Energiezählers (3).

11. Betriebsverfahren nach einem der Ansprüche 1 bis 10, **dadurch gekennzeichnet, dass** die Eingabeeinrichtung (18) als Teil des Sicherheitsmoduls (10) ausgebildet wird und/oder in dem Sicherheitsgehäuse (19) angeordnet wird und/oder dass die Eingabeeinrichtung (18) wenigstens zwei Eingabetasten vorsieht, wobei die wenigstens zwei Eingabetasten der Eingabeeinrichtung (18) bevorzugt als kapazitiv wirksame Eingabetasten ausgebildet werden.

12. Betriebsverfahren nach einem der Ansprüche 1 bis 11, **dadurch gekennzeichnet, dass** die Eingabeeinrichtung (18) in dem Vorrichtungsgehäuse (8) und/oder dem Sicherheitsgehäuse (19) derart angeordnet wird, dass sie sich von außen betätigen lässt.

13. Betriebsverfahren nach einem der Ansprüche 1 bis 11, **dadurch gekennzeichnet, dass** an einem Vorrichtungsgehäuse (8) der Ladestation (1) eine Ausnehmung (30) vorgesehen wird und dass die Datenanzeigeeinrichtung (17) des Sicherheitsmoduls (10) der Ausnehmung (30) derart zugeordnet wird, dass die Datenanzeigeeinrichtung (17) von außen durch die Ausnehmung (30) des Vorrichtungsgehäuses (8) hindurch einsehbar ist.

14. Betriebsverfahren nach einem der Ansprüche 1 bis 13, **dadurch gekennzeichnet, dass** über die zweite Datenleitungsschnittstelle (15) von dem Sicherheitsmodul (10) zu der Zentralsteuereinheit (2) einerseits und von der Zentralsteuereinheit (2) zu dem Sicherheitsmodul (10) andererseits rückwirkungsfrei bidirektional kommuniziert wird.

15. Betriebsverfahren nach einem der Ansprüche 1 bis 14, **dadurch gekennzeichnet, dass** die zusätzliche Datenleitung von dem Energiezähler (3) zu der Zentralsteuereinheit (2) geführt wird, wobei die zusätzliche Datenleitung ausgebildet ist zur Übertragung des aktuellen Zählerstands von dem Energiezähler (3) and die Zentralsteuereinheit (2), und/oder dass die gesicherte Datenleitung (14) und/oder die Steuerungsleitung (16) und/oder die zusätzliche Datenleitung als Bussystem und/oder als ein Teil eines Bussystems ausgebildet werden.
